(19) Europäisches Patentamt / European Patent Office / Office européen des brevets

(11) EP 4 043 853 A1

(12) **EUROPEAN PATENT APPLICATION**
published in accordance with Art. 153(4) EPC

(43) Date of publication:
17.08.2022 Bulletin 2022/33

(21) Application number: 20884346.6

(22) Date of filing: 04.11.2020

(51) International Patent Classification (IPC):
*G01M 13/02* (2019.01)     *B23Q 17/00* (2006.01)
*B23Q 17/12* (2006.01)     *B29C 45/76* (2006.01)

(52) Cooperative Patent Classification (CPC):
**B23Q 17/00; B23Q 17/12; B29C 45/76; G01M 13/02**

(86) International application number:
**PCT/JP2020/041229**

(87) International publication number:
**WO 2021/090842 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 08.11.2019   JP 2019202985

(71) Applicant: DMG Mori Co., Ltd.
**Yamatokoriyama-shi, Nara 639-1160 (JP)**

(72) Inventors:
- **SAKURAI Tsutomu**
  **Yamatokoriyama-shi, Nara 639-1160 (JP)**
- **KUNIKI Shinnosuke**
  **Yamatokoriyama-shi, Nara 639-1160 (JP)**
- **SHIROSHITA Ryosuke**
  **Yamatokoriyama-shi, Nara 639-1160 (JP)**

(74) Representative: **TBK**
**Bavariaring 4-6**
**80336 München (DE)**

(54) **MACHINE TOOL AND DISPLAY DEVICE**

(57) A machine tool that visualizes the state of a ball screw in an easy-to-understand way includes a detector that detects at least one sensed value among vibrations, sound, and a current, heat, light, and power value applied to drive a ball screw during warming-up, a feature amount extractor that extracts a first feature amount and a second feature amount from the sensed value obtained by the detector, and a display that displays a point plotting the sensed value, and at least two boundaries laid out like contour lines to represent the possibility of generation of an anomaly in the ball screw, on a plane having a first axis defined by numerical values regarding the first feature amount and a second axis defined by numerical values regarding the second feature amount.

FIG. 1

EP 4 043 853 A1

**Description**

This application claims the benefit of Japanese Patent Application No. 2019-202985, filed November 8, 2019, which is hereby incorporated by reference herein in its entirety.

TECHNICAL FIELD

The present invention relates to a machine tool and a display device.

BACKGROUND ART

In this technical field, patent literature 1 discloses a technique of determining that the life of a ball screw has come to its limit when a value A of total energy applied to the ball screw exceeds a life energy value B (A ≥ B).

CITATION LIST

PATENT LITERATURE

Patent literature 1: Japanese Patent Laid-Open No. 2000-238106

SUMMARY OF THE INVENTION

TECHNICAL PROBLEM

In the technique described in the above literature, however, it is difficult to visualize the state of a ball screw in an easy-to-understand way.
The present invention provides a technique of solving the above-described problem.

SOLUTION TO PROBLEM

One example aspect of the present invention provides a machine tool comprising:

a detector that detects at least one sensed value among a vibration, sound, and a current, heat, light, and power value applied to drive a ball screw during warming-up;
a feature amount extractor that extracts a first feature amount and a second feature amount from the sensed value obtained by the detector; and
a display that displays a point plotting the sensed value, and at least two boundaries laid out like contour lines to represent a possibility of generation of an anomaly in the ball screw, on a plane having a first axis defined by numerical values regarding the first feature amount and a second axis defined by numerical values regarding the second feature amount.

Another example aspect of the present invention provides a display device that extracts a first feature amount and a second feature amount from a sensed value obtained from a machine tool including a detector configured to detect at least one sensed value among a vibration, sound, and a current, heat, light, and power value applied to drive a ball screw during warming-up, and displays a possibility of generation of an anomaly in the ball screw, the display device displaying a point plotting the sensed value, and at least two boundaries laid out like contour lines to represent the possibility of generation of an anomaly in the ball screw, on a plane having a first axis defined by numerical values regarding the first feature amount and a second axis defined by numerical values regarding the second feature amount.

ADVANTAGEOUS EFFECTS OF INVENTION

According to the present invention, the state of a ball screw can be visualized in an easy-to-understand way.

BRIEF DESCRIPTION OF DRAWINGS

Fig. 1 is a view showing the arrangement of a machine tool according to the first example embodiment;

Fig. 2 is a view for explaining the outer appearance of a machine tool and a ball screw according to the second example embodiment;

Fig. 3A is a reference graph showing an example of a one-dimensional graph on the technical premise of the machine tool according to the second example embodiment;

Fig. 3B is a view showing the internal arrangement of the machine tool according to the second example embodiment;

Fig. 3C is a view for explaining the state of a change of a two-dimensional map before and after correction by the corrector of the machine tool according to the second example embodiment;

Fig. 3D is a view for explaining extraction of a feature amount by the feature amount extractor of the machine tool according to the second example embodiment;

Fig. 4 is a view for explaining the locus of points on the two-dimensional map;

Fig. 5 is a table showing an example of a table in the machine tool according to the second example embodiment;

Fig. 6 is a flowchart for explaining the processing procedures of the machine tool according to the second example embodiment; and

Fig. 7 is a view for explaining the display of the machine tool according to the second example embodiment.

DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

[First Example Embodiment]

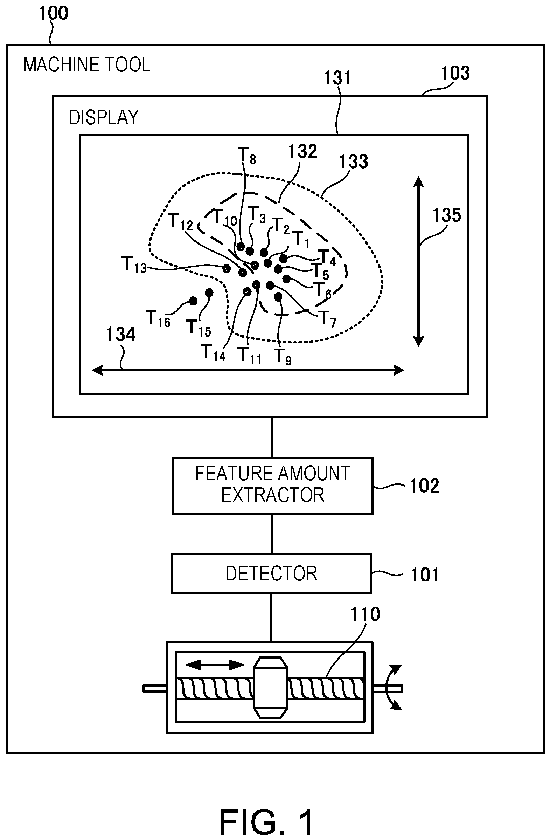

A machine tool 100 according to the first example embodiment of the present invention will be described with reference to Fig. 1. Fig. 1 is a view for explaining the arrangement of the machine tool 100 according to the example embodiment.

As shown in Fig. 1, the machine tool 100 includes a detector 101, a feature amount extractor 102, and a display 103. The detector 101 detects at least one sensed value among vibrations, sound, and a current, heat, light, and power value applied to drive a ball screw 110 during warming-up. The feature amount extractor 102 extracts the first and second feature amounts from the sensed values obtained by the detector 101. The display 103 displays points ($T_1$ to $T_{16}$ in Fig. 1) plotting the sensed values, and at least two boundaries 132 and 133 laid out like contour lines to represent the possibility of generation of an anomaly in the ball screw 110, on a plane having a first axis 134 defined by numerical values regarding the first feature amount and a second axis 135 defined by numerical values regarding the second feature amount.

The points ($T_1$ to $T_{10}$ in Fig. 1) displayed within the first boundary 132 displayed on the display 103 represent that the ball screw 110 operates normally. The points ($T_{11}$ to $T_{14}$) displayed between the boundaries 132 and 133 represent that the ball screw 110 operates normally but a small anomaly not affecting processing (anomaly regarded as the sign of a decrease in accuracy caused by a breakage of the ball screw) may occur. Further, the points ($T_{15}$ and $T_{16}$) displayed outside the second boundary 133 represent that an anomaly affecting the processing accuracy may occur. These boundaries can be set arbitrarily. The boundaries may be set so that a region representing that the ball screw operates normally is divided by a plurality of boundaries, the divided regions are displayed, and the outermost region represents the generation of an anomaly.

The machine tool 100 in the present invention is not limited to the form shown in Fig. 1, and may be an additive manufacturing tool that performs manufacturing by adding a material, a subtractive manufacturing tool that subtracts a material, or a tool such as a laser that performs manufacturing by emitting light. More specifically, the machine tool 100 includes a lathe, a drilling machine, a boring machine, a milling machine, a gear cutting machine, a grinding machine, a multi-spindle processing machine, a laser processing machine, and a laminating processing machine. These machines perform various processes such as turning, cutting, boring, grinding, polishing, rolling, forging, folding, molding, micromachining, and lamination on works made of metal, wood, stone, resin, and the like. The machine tool 100 also includes a multi-function processing machine that combines these processes.

According to the first example embodiment, the possibility of generation of an anomaly in a ball screw is displayed as a two-dimensional map, so the state of a ball screw can be visualized in an easy-to-understand way. Since the possibility of generation of an anomaly in a ball screw can be determined appropriately, a breakage of the ball screw and the like can be prevented and a decrease in productivity by, for example, replacement of the ball screw can be prevented.

[Second Example Embodiment]

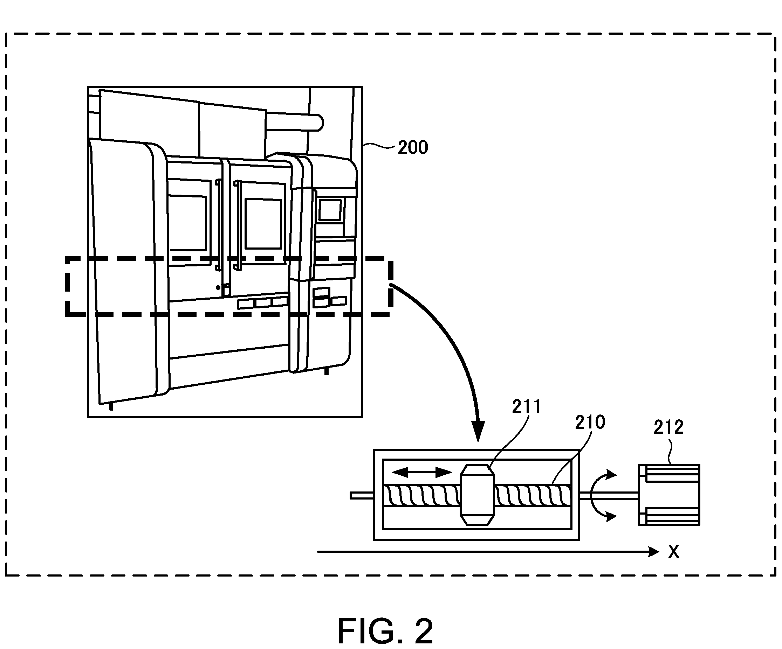

A machine tool according to the second example embodiment of the present invention will be described with reference to Figs. 2 to 5. Fig. 2 is a view for explaining the outer appearance of the machine tool and a ball screw according to the second example embodiment. A machine tool 200 according to the second example embodiment will be described using a multi-function processing machine. The machine tool 200 includes a ball screw 210, a stage 211, and a motor 212. The rotation of the motor 212 is transmitted to the ball screw 210, and the stage 211 reciprocates by the rotation driving force of the ball screw 210. As the stage 211 reciprocates, a machining target on the stage 211 can be moved to a desired position. The ball screw 210 is formed from a screw shaft, nut, ball, and the like, and is one of machine element parts. The ball screw 210 converts a linear motion into a rotational motion or converts a rotational motion into a linear motion.

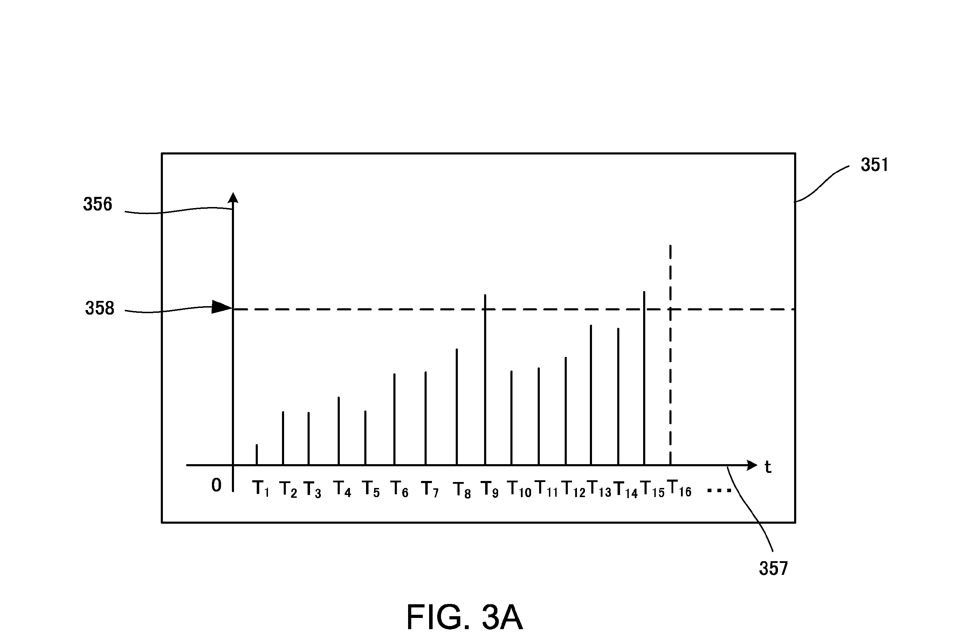

Fig. 3A is a graph showing an example of a one-dimensional graph on the technical premise of the example embodiment. Fig. 3A shows a graph 351 in which an ordinate 356 represents the value of a current applied to the motor 212 and an abscissa 357 represent times $T_1$ to $T_{16}$. When such a graph is used and $T_{16}$ is the timing of a breakage, a proper alert timing is $T_{15}$ in actual. To detect the $T_{15}$ timing, a threshold 358 needs to be set in advance. At the $T_9$ timing when the current value exceeds the threshold 358, replacement of the ball screw 210 is promoted. Although the ball screw 210 can still be used, it is replaced and wasted by the time of $T_9$ to $T_{15}$. The ball screw 210 is replaced frequently, decreasing the productivity.

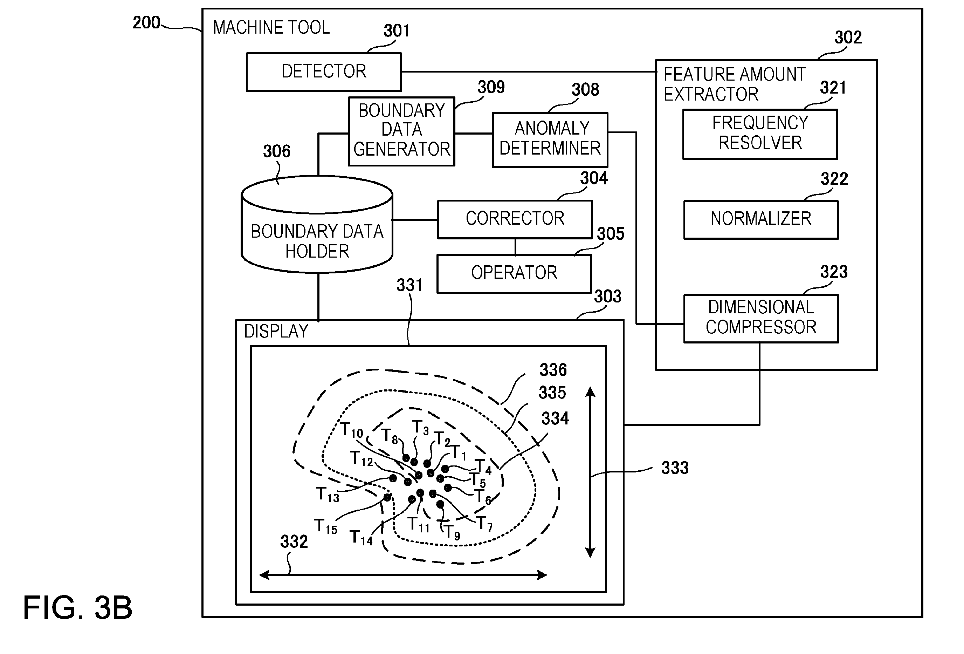

Fig. 3B is a view showing the internal arrangement of the machine tool 200 according to the example embodiment. The machine tool 200 includes a detector 301, a feature amount extractor 302, a display 303, a corrector 304, an operator 305, a boundary data holder 306, an anomaly determiner 308, and a boundary data generator 309. Based on a sensed value obtained by the detector 301, the machine tool 200 displays on the display 303 a two-dimensional map 331 for determining the possibility of generation of an anomaly in a ball screw.

The detector 301 detects the value of a current applied to rotate the motor 212 during warming-up of the machine tool 200, and outputs it as a sensed value. More specifically, the detector 301 includes a current sensor provided for the UVW phase of the three-phase alternating current, and an A/D converter that converts a measured current value into digital data. For example, the sampling frequency of the A/D converter is 2 kHz and the A/D converter converts a current value into a 16-bit signal. At this time, time-series data at 256 points can be obtained as input data every 128 msec.

Warming-up is to operate a tool at low load for a predetermined time immediately after startup or the like. Warming-up is performed to promote adaptation of the component parts of the tool by the low-load operation so that each part can operate smoothly and reliably. The slow-rotation, low-load operation can distribute a lubricating oil to each part and guide the gap (clearance) between the parts to a proper state so that the tool can exert its intrinsic performance.

The detector 301 calculates a Q-axis current $i_q$ and a D-axis current $i_d$ using transformation (1) for a digital current value output from the A/D converter:

$$\begin{bmatrix} i_d \\ i_q \end{bmatrix} = \sqrt{\frac{2}{3}} \begin{bmatrix} \cos\theta_e & \cos\left(\theta_e - \frac{2}{3}\pi\right) & \cos\left(\theta_e + \frac{2}{3}\pi\right) \\ -\sin\theta_e & -\sin\left(\theta_e - \frac{2}{3}\pi\right) & -\sin\left(\theta_e + \frac{2}{3}\pi\right) \end{bmatrix} \begin{bmatrix} i_u \\ i_v \\ i_w \end{bmatrix} \quad \cdots (1)$$

where the Q-axis current $i_q$ is the effective current, and the D-axis current $i_d$ is the reactive current. The detector 301 sends the Q-axis current $i_q$ as a sensed value to the feature amount extractor 302.

The feature amount extractor 302 includes a frequency resolver 321, a normalizer 322, and a dimensional compressor 323. The frequency resolver 321 extracts a frequency component from the sensed value received from the detector 301 by using Fourier transform or the like. The normalizer 322 normalizes the data after frequency resolution. The dimensional compressor 323 compresses the dimensions of the normalized data, generating a two-dimensional feature amount (data having the first and second feature amount components). The feature amount extractor 302 is a processor for executing a predetermined program.

Based on the two-dimensional feature amount data extracted by the dimensional compressor 323, the display 303 displays the two-dimensional map 331 representing the possibility of generation of an anomaly in the ball screw 210. The two-dimensional map 331 includes a plane having a first axis 332 defined by first feature amounts generated by the dimensional compressor 323 and a second axis 333 defined by second feature amounts. On this plane, the feature amounts of sensed values are plotted ($T_1$ to $T_{16}$). Further, the display 303 displays, on the screen, boundaries (three boundaries 334 to 336 in this example) laid out like contour lines to represent the possibility of generation of an anomaly in the ball screw 210. In the example embodiment, "anomaly" means a breakage of the ball screw 210.

The two-dimensional map 331 represents that, as the feature amount of a plotted sensed value becomes more distant outward from the center of the innermost boundary 334, the possibility of generation of an anomaly becomes higher.

For example, the feature amounts ($T_1$, $T_8$, $T_9$,...) of sensed values plotted within the boundary 334 represent that the possibility of generation of an anomaly is very low, so it can be determined that the operation state is normal. That is, when points representing the feature amounts of sensed values are displayed only within the boundary 334, a user who sees the two-dimensional map 331 can operate the machine tool 200 without worry.

When a point representing the feature amount of a sensed value exists between the boundaries 334 and 335, the user determines that the machine tool 200 is in an operation state in which the possibility of generation of an anomaly is low but equal to or higher than a predetermined value, and operates the machine tool 200 carefully. For example, the user can clean chips inside the machine tool, check and pour a lubricating oil, or set the rotational speed of the motor 212 to a value at which the ball screw 210 hardly breaks. If the feature amount of a sensed value exists between the boundaries 334 and 335, the user should begin considering replacement of the ball screw 210 or the like.

For example, Tn to $T_{14}$ are points outside the boundary 334 with reference to the two-dimensional map 331, and this is highly likely the sign of generation of an anomaly during the operation of the machine tool 200. The point $T_{15}$ exists outside the boundary 335 and represents that the ball screw 210 needs to be replaced immediately. From the display of the two-dimensional map 331, the user can determine the timing of replacement of the ball screw 210 more accurately than from the graph 351 before the cutting accuracy actually decreases.

By checking the locus of points, the user can easily grasp, for example, the sign of an anomaly that may be generated in the long term in the machine tool 200. The user can make a medium- and long-term maintenance plan of the machine tool 200 and a procurement plan of consumables.

For example, if the feature amount of a sensed value is plotted outside the boundary 336, it is considered that the ball screw 210 highly likely breaks soon. Thus, the ball screw 210 should be replaced quickly.

Every time the detector 301 detects a sensed value, the display 303 additionally displays a point plotting the feature of the sensed value and at the same time, displays a boundary serving as the criterion of normal/anomaly determination.

The display 303 may be, for example, a display provided as part of the machine tool 200 or a display outside the machine tool 200. The two-dimensional map 331 may be projected on a screen using a projector. In this case, the display device displays, as the two-dimensional map 331, the possibility of generation of an anomaly in the ball screw 210 based on a feature amount extracted from at least one of vibrations (frequency and amplitude of vibrations) generated on the spindle, sound (volume and frequency of sound detected by a microphone) inside the machine tool 200, a current applied to the ball screw 210 or the spindle, heat (temperature or heat amount detected by a heat sensor) generated in the spindle or a work, light (quantity, color, and frequency of light captured by a camera) generated around the work, and a power value, which are detected as sensed values during warming-up. Information about the two-dimensional map 331 may be held on the display device side. The power value is generally a value obtained by dividing the amount of work (specific cutting resistance $\times$ depth of cut $\times$ feeding $\times$ cutting speed) by $60 \times 1,000 \times$ mechanical efficiency and is called a main spindle power (Pc). For example, the power value includes the power value of the motor consumed by cutting or turning. The cutting torque and the rotational speed of a tool may be adopted as sensed values.

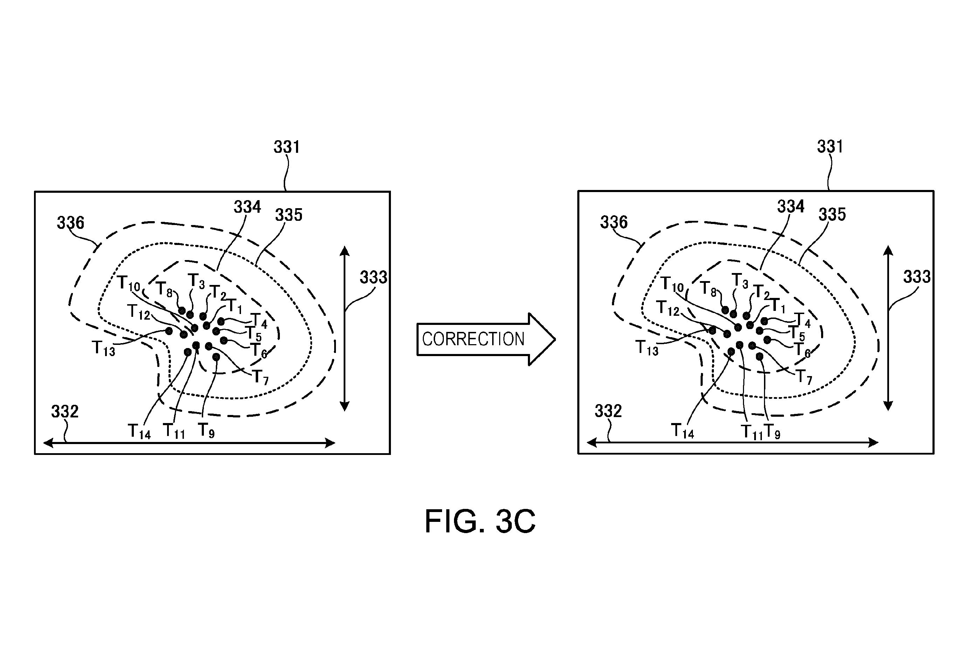

The corrector 304 corrects the two-dimensional map 331 displayed by the display 303 in accordance with an instruction from the user. More specifically, as shown in Fig. 3C, the corrector 304 corrects the shape of the boundary 334 of the two-dimensional map 331 in a direction in which the shape is widened to the lower left side. By widening the boundary 334, the user can widen the range of normal sensed values. If an experienced user or the like who can make a normal/anomaly determination corrects the shape of the boundary 334, another user of the tool can follow the determination of the experienced user. In the example of Fig. 3C, the corrector 304 corrects and widens the boundary 334 so that the points $T_{12}$ to $T_{14}$ fall within the boundary 334.

Sensed values obtained at the time of shipment of the machine tool 200 from the factory, and sensed values obtained in a state in which the machine tool 200 is installed in the factory of the user or the like may be different in the boundaries 334 to 336 of the rendered two-dimensional map 331. In other words, the operation conditions of the machine tool 200 are not always constant.

For example, the weights of machining targets differ from each other, so the shapes of the boundaries 334 to 336 of the two-dimensional map 331 representing the possibility of a breakage of the ball screw 210 change depending on a machining target. Considering this, the machine tool 200 is configured to add a correction to the shapes of the boundaries 334 to 336 of the rendered two-dimensional map 331. The two-dimensional map 331 suited to the use environment of the user can be displayed.

As the correction method, for example, the user may change the shapes of the boundaries 334 to 336 by dragging part of the boundaries 334 to 336 with the operator 305 such as a mouse. Alternatively, the user may change the shapes of the boundaries 334 to 336 by inputting numerical values using the operator 305 such as a keyboard. Alternatively, data regarding boundaries after correction may be saved on the cloud and shared with another machine tool.

Based on the feature of a sensed value extracted by the feature amount extractor 302, the anomaly determiner 308 determines whether an anomaly has occurred. The anomaly determiner 308 transfers the determination result to the boundary data generator 309.

The boundary data generator 309 generates a boundary between a point at which the anomaly determiner 308 determines "normal", and a point at which the anomaly determiner 308 determines "anomaly".

The boundary data holder 306 holds data of the boundaries 334 to 336 of the two-dimensional map 331 displayed on the display 303. The corrector 304 corrects the shapes of the boundaries 334 to 336 by changing the data of the boundaries 334 to 336 held by the boundary data holder 306.

(Feature Amount Extraction Processing)

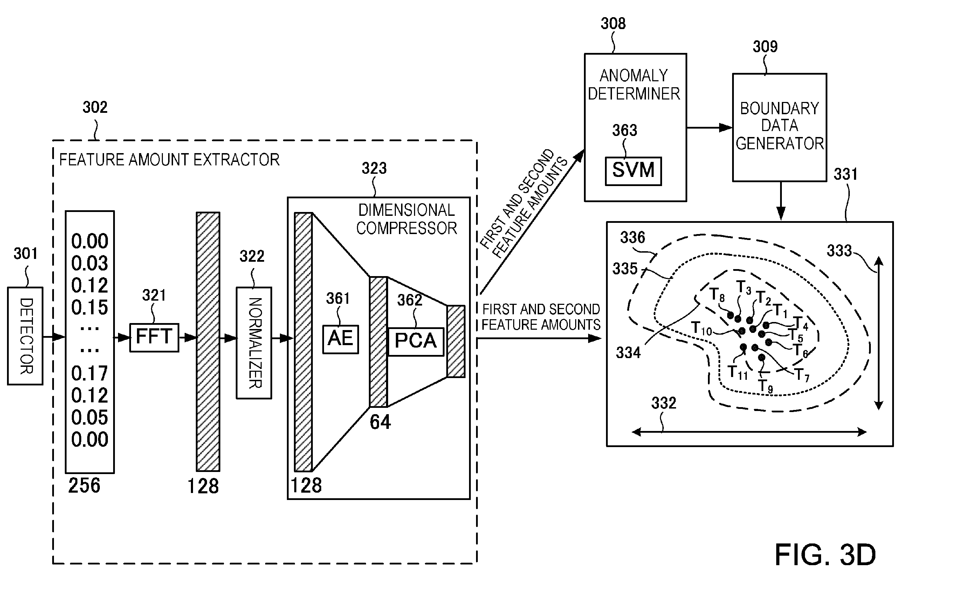

A feature amount extraction method by the feature amount extractor 302 will be described in detail with reference to Fig. 3D. The frequency resolver (FFT in Fig. 3D) 321 extracts the frequency component of a current value detected by the detector 301 during warming-up by the machine tool 200, and generates a frequency spectrum. Frequency resolution is performed based on, for example, FFT (Fast Fourier Transform) but is not limited to this.

In general, arbitrary periodic time-series data $y_t$ can be regarded as the sum of trigonometric functions of various periods. This is called Fourier series expansion. A Fourier series of an observed value $y_t$ having a fundamental period To[s] is given by equation (2) using a complex number:

$$y_t = \sum_{n=-\infty}^{\infty} c_n e^{in\omega_0 t} \qquad \cdots (2)$$

where $\omega_0 = 2\pi f_0$ [rad/s] is the fundamental angular frequency, and fo = $1/T_0$ [Hz] is the fundamental frequency. The complex Fourier coefficient $c_n$ is given by equation (3):

$$c_n = \frac{1}{T_0} \int_{-T_0/2}^{T_0/2} y_t e^{-in\omega_0 t} \, dt \quad \cdots (3)$$

Letting d be the sampling time of current data and n be the window length, a maximum frequency $f_{max}$ and a frequency resolution $\Delta f$ are given by equations (4) and (5):

$$f_{max} = \frac{1}{2d} - 1 \quad \cdots (4)$$

$$\Delta f = \frac{1}{nd} \qquad \cdots (5)$$

For example, when the sampling frequency is 2 kHz and the window length is 256 points, the maximum frequency $f_{max}$ after FFT is 1 kHz and the frequency resolution $\Delta f$ is 7.8125 Hz. That is, time-series data of 256 points can be expressed by a vector of 128 points by FFT, and this vector serves as an input to the next auto-encoder. Note that the normalizer 322 normalizes the vector of 128 points and sends it to the dimensional compressor 323.

The dimensional compressor 323 performs dimensional compression using an auto-encoder 361 and a PCA (Principal Component Analysis) 362. The auto-encoder 361 is an algorithm for dimensional compression using a neural network in machine learning, and is an algorithm capable of extracting features of the number of dimensions much smaller than that of dimensions of an input sample.

In the example embodiment, the frequency resolver 321 resolves the frequency of an applied current value into data expressed by vectors in a plurality of dimensions (128 dimensions in this case). The vectors in a plurality of dimensions (128 dimensions in this case) after frequency resolution are input to the dimensional compressor 323. The intermediate layer of the auto-encoder 361 of the dimensional compressor 323 is set to a low dimension, and vector inputs in a plurality of dimensions are compressed to low dimensions. In general, the auto-encoder 361 uses the same data for the input and output layers in the three-layer neural network, compresses data from the input layer to the intermediate layer, and then decompress it to the output layer. The auto-encoder 361 repeats this operation, deriving an intermediate layer of high recall ratio. Here, the intermediate layer is set to 64 dimensions. That is, vectors in 128 dimensions input to the dimensional compressor 323 are compressed to 64 dimensions while the feature is maintained as much as possible. For example, when vectors after FFT are in 128 dimensions, they can be compressed to 64 dimensions or 10 dimensions by the auto-encoder 361. Processing using learning and a learned model in the auto-encoder 361 will be explained below.

(i) Learning in Auto-Encoder

FFT data $x^\beta$ of an applied current waveform of experimental number $\beta$ is given by a set of vectors in R dimensions, like equation (6):

$$x^\beta = (\hat{x}_1^\beta, \dots, \hat{x}_R^\beta) \cdots (6)$$

where

$$\hat{x}_r^\beta$$

is the rth section of experimental number $\beta$, and R is the total number of sections.

Then, the encoder is given by equation (7):

$$\begin{bmatrix} i_d \\ i_q \end{bmatrix} = \sqrt{\frac{2}{3}} z_r^\beta = s(W\hat{x}_r^\beta + b) \quad \cdots (7)$$

The decoder is given by equation (8):

$$\hat{y}_r^\beta = s(W' z_r^\beta + b') \cdots (8)$$

Since W' is the transposed matrix of W, three parameters W, b, and b' are obtained.

In this way,

$$\hat{y}_r^\beta$$

is similar to its original signal:

$$\hat{x}_r^\beta$$

For example, when Adam (Adaptive moment estimation) is used for the optimization method, a moving average $v_t = E[g^2]_t$ of the square of a gradient up to an immediately preceding step t-1, and a moving average $m_t = E[g]_t$ of the gradient are given by equations (9):

$$m_t = \beta_1 m_{t-1} + (1 - \beta_1)g_t$$
$$v_t = \beta_2 v_{t-1} + (1 - \beta_2)g_t^2 \quad \cdots (9)$$

where $\beta_1$ and $\beta_2 \in [0, 1)$ are hyper parameters. For example, $\beta_1$ and $\beta_2$ may take the following values, which are recommended values in Adam, or may be adjusted using the recommended values as criteria:
$\beta_1 = 0.9$
$\beta_2 = 0.999$
Here, initialization at vo = 0 yields equation (10):

$$v_t = (1 - \beta_2) \sum_{i=1}^{t} \beta_2^{t-i} \cdot g_i^2 \cdots (10)$$

That is, the relation between the moving average E[vt] of the second moment vt and the true second moment E[$g^2_t$] is given by equation (11):

$$E[v_t] = E[g_t^2] \cdot (1 - \beta_2^t) + \zeta \cdots (11)$$

Setting the values of the hyper parameters to approximate to $\zeta = 0$ yields:

$$\widehat{v_t} = \frac{v_t}{1 - \beta_2^t}$$
$$\widehat{m_t} = \frac{m_t}{1 - \beta_1^t} \cdots (12)$$

This yields a parameter update equation:

$$W_t = W_{t-1} - \frac{\alpha}{\sqrt{\widehat{v}_t} + \varepsilon} \widehat{m}_t \cdots (13)$$

As for the biases b and b', equations can be derived by similar procedures.

(ii) Processing in Auto-Encoder

The encoder of the learned auto-encoder is used for dimensional compression:

$$z_r^\beta = s(W\hat{x}_r^\beta + b) \cdots (14)$$

For example, when vectors after FFT are in 128 dimensions, the intermediate layer is set to 64 dimensions, and the auto-encoder is made to learn, compressed 64-dimension data:

$$\hat{x}_r^\beta$$

is output from a 128-dimension input:

$$z_r^\beta$$

PCA (Principal Component Analysis) is a method of expressing data by lower dimensions using principal components. PCA can compress an input to data in an arbitrary number of dimensions and output the compressed data.

(i) Learning

Let X be the data matrix of an input and x be a column vector including a single data point. The variance maximization problem of data is formulated:

$$\max_{w} \sum_{i=1}^{n} \left( x_i^T w \right)^2$$
$$w^T w = 1 \qquad \cdots (15)$$

Formula (15) is rewritten into the form of the matrix and vector:

$$\max_{w} w^T X^T X w$$
$$w^T w = 1 \qquad \cdots (16)$$

That is, while a constraint condition that the norm of w becomes 1 is satisfied, w maximizing the output Xw is obtained. The solution resides in singular value decomposition of X. Letting V and w be principal components in k dimensions and W be the data matrix,

$$W = V_k$$

where k is the number of unrelated variable groups included in the principal component V. Letting Z be the vector after dimensional compression, the vector of projective coordinates is given by

$$Z = XV_k$$

(ii) Processing

Dimensional compression is performed using the principal component V obtained by learning. It can be set to, for example, when a vector after auto-encoder processing has 64 dimensions, compress a 64-dimension input $X_{64}$ into a two-dimensional vector $Z_2$.
Since $Z_2 = X_{64}V_2$, the two-dimensional vector $Z_2$ is output with respect to the 64-dimension input $X_{64}$ based on the principal component $V_2$. Two vector components of the vector $Z_2$ correspond to the first and second feature amounts. The two components of the vector $Z_2$ are used as the first and second axes and plotted to a two-dimensional map.
A SVM (Support Vector Machine) 363 is a pattern recognition method originally aimed at two-class classification. The SVM 363 obtains an optimal separating hyperplane that maximizes a margin. The margin is a distance between a hyperplane and a sample closest to the hyperplane. The maximized margin (distance) is given by f(x).
The SVM 363 is One Class SVM, which is an expansion of normal SVM, and builds a model that maps normal data to a nonnegative value and abnormal data to a negative value. That is, the One Class SVM is a method of performing learning based on a set of data, most of which are normal, and determining whether unknown data is normal or abnormal. In general, many normally manufactured products and many data in a normal state can be obtained, but abnormal products and data in an abnormal state are rarely obtained. The One Class SVM is applicable to such a case.

(i) Learning

When model building data cannot be linearly separated, the SVM maps the model building data into a high-dimensional space using a nonlinear function and obtains a separating hyperplane in the high-dimensional space. This is equivalent to obtaining a nonlinear separating boundary in an original low-dimensional space. Mapping into the high-dimensional space uses a kernel function K:

$$K\left( x_i, x_j \right) = \varphi(x_i)^T \varphi(x_j) \qquad \cdots (17)$$

where $x_i$ is the first feature amount, $x_j$ is the second feature amount, and $\phi$ is the nonlinear function. The distance f(x) determined by a SVM model is given by equation (18):

$$f(x) = w^T \varphi(x) + b \quad \cdots (18)$$

where w is the weight vector, and b is the bias. The new sample x can be discriminated by the sign of f(x). Model building in the One Class SVM is formulated as SVM when normal data for model building are regarded as the same class and the origin is regarded as the other class. In other words, the margin in the One Class SVM is defined as a distance between the origin and a sample closest to the origin. The margin maximization problem is formulated like formula (19):

$$\min_{w, \xi_i, b} \frac{1}{2} \|w\|^2 + \frac{1}{vn} \sum_{i=1}^{N} \xi_i + b$$
$$s.t. \, w \cdot \varphi(x_i) \geq -b - \xi_i \quad \cdots (19)$$
$$\xi_i \geq 0$$

where $\xi_i$ (i = 1,..., N) is the slack variable, and $v \in (0, 1)$ is the error ratio when model building data is discriminated in a built One Class SVM model. The Lagrange multipliers $\alpha_i \geq 0$ and $\eta_i \geq 0$ are introduced to rewrite the optimization problem, like equation (20):

$$L(w, \xi_i, b) = \frac{1}{2} \|w\|^2 + \frac{1}{vn} \sum_{i=1}^{N} \xi_i + b - \sum_{i=1}^{N} \alpha_i (w \cdot \varphi(x_i) + b + \xi_i) - \sum_{i=1}^{N} \eta_i \xi_i \quad \cdots (20)$$

The Lagrange undetermined multiplier method yields equations (21):

$$\frac{\partial L}{\partial w} = 0 \rightarrow w = \sum_{i=1}^{N} \alpha_i \varphi(x_i)$$
$$\frac{\partial L}{\partial \xi_i} = 0 \rightarrow \alpha_i = \frac{1}{vm} - \eta_i \quad \cdots (21)$$
$$\frac{\partial L}{\partial b} = 0 \rightarrow \sum_{i=1}^{N} \alpha_i = 1$$

In summary, this problem can be expressed by dual equation (22):

$$\min_{\alpha} \sum_{i=1}^{N} \sum_{j=1}^{N} \alpha_i \alpha_j K(x_i, x_j)$$
$$s.t. \sum_{i=1}^{N} \alpha_i = 1 \quad \cdots (22)$$
$$0 \leq \alpha_i \leq \frac{1}{vN}$$

This optimization problem can be solved as a standard quadratic programing problem. The distance f(x) finally determined by the One Class SVM model is given by equation (23):

$$f(x) = \sum_{i=1}^{N} \alpha_i K(x_i, x) + b \quad \cdots (23)$$

Generally, both normal data and abnormal data are necessary to build a discriminative model like an anomaly detection model. As is apparent from equation (23), however, the One Class SVM can build a discriminative model from only normal data.

As described above, the One Class SVM outputs the distance f(x) from the hyperplane. Normal or anomaly can be determined based on the distance f(x). The distance f(x) takes a larger negative value for larger abnormal data, and a larger positive value for larger normal data.

The boundary data generator 309 determines data having a small distance f(x), that is, abnormal data as an outlier, and generates a boundary.

For example, assuming that learning data includes abnormal values by 0.2%, the anomaly determiner 308 can regard upper 0.2% data as outliers in ascending order of the distance f(x) and create a normal range.

(ii) Processing

Data dimension-compressed by the PCA is input to the learned One Class SVM, obtaining the output f(x) in accordance with equation (23).

The anomaly determiner 308 uses a sign-reversed output f(x) as an anomaly score g(x), which is represented by g(x) = -f(x). That is, the anomaly determiner 308 determines that data is normal when the anomaly score g(x) takes a negative value, and that data is abnormal when it is equal to or larger than 0.

The boundary data generator 309 generates a boundary between points at which data are determined to be normal based on the anomaly score g(x), and points at which data are determined to be abnormal. The boundary data generator 309 saves the boundary as boundary data in the boundary data holder 306.

In the example embodiment, the dimensions of a sensed value are temporarily compressed (128 dimensions → 64 dimensions → two dimensions) to facilitate normal/anomaly determination and separate normal and anomaly. Needless to say, the example embodiment is not limited to this. It is also possible to make a normal/anomaly determination using the One Class SVM based on 128-dimension data while compressing dimensions (128 dimensions → 64 dimensions → two dimensions) and plot data on a two-dimensional plane. This prolongs the processing time, but increases the accuracy more than using two-dimensional data.

The PCA 362 is used as the dimensional compression method but, for example, a VAE (Variational Auto Encoder) may be used instead of the PCA 362. Alternatively, dimensions may be compressed up to two dimensions by using only the auto-encoder 361 without using the PCA 362.

Note that the dimensional compression method is not limited to the above-described method, and various methods may be used in combination. Here, creation of the two-dimensional map 331 for a breakage of the ball screw 210 has been exemplified. As for a breakage of a bearing, only a sensed value obtained at first is different, subsequent processing can be performed similarly, and a similar two-dimensional map 331 can be created. For example, to capture the sign of a breakage of the bearing, data of sound generated inside the machine tool or vibrations generated on the spindle is obtained as a sensed value during warming-up.

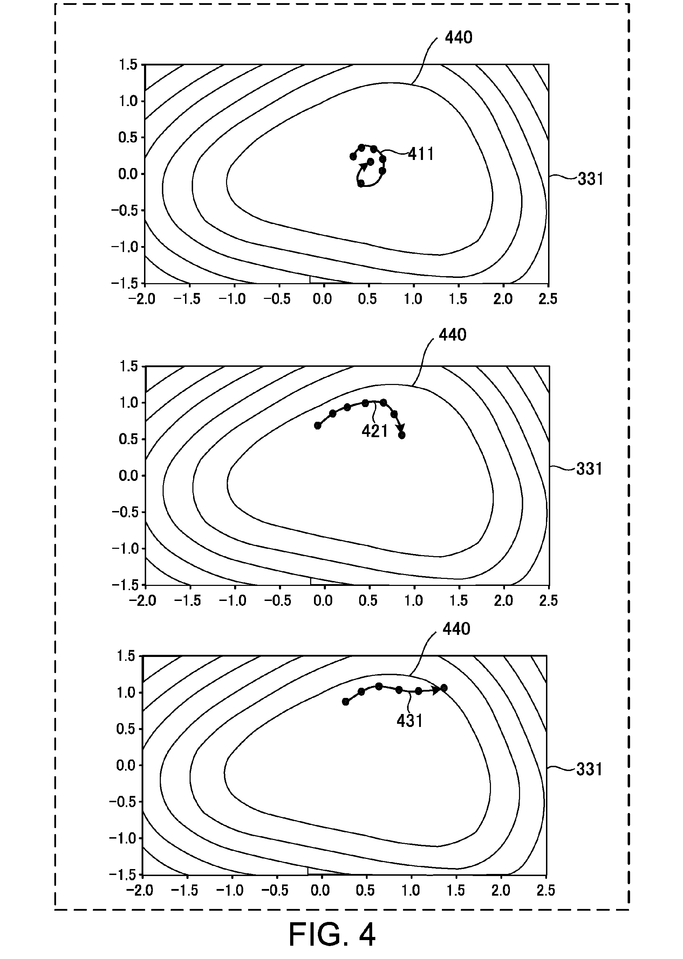

Fig. 4 is a view for explaining the locus of points on the two-dimensional map 331. In all upper, middle, and lower two-dimensional maps 331, points exist in a normal range. However, a locus 431 moves in a direction gradually apart from the center of the boundary, compared to loci 411 and 421, so attention should be paid. From this, the two-dimensional map 331 makes it possible to grasp a change of the operating state of the ball screw more accurately than a conventional one-dimensional display.

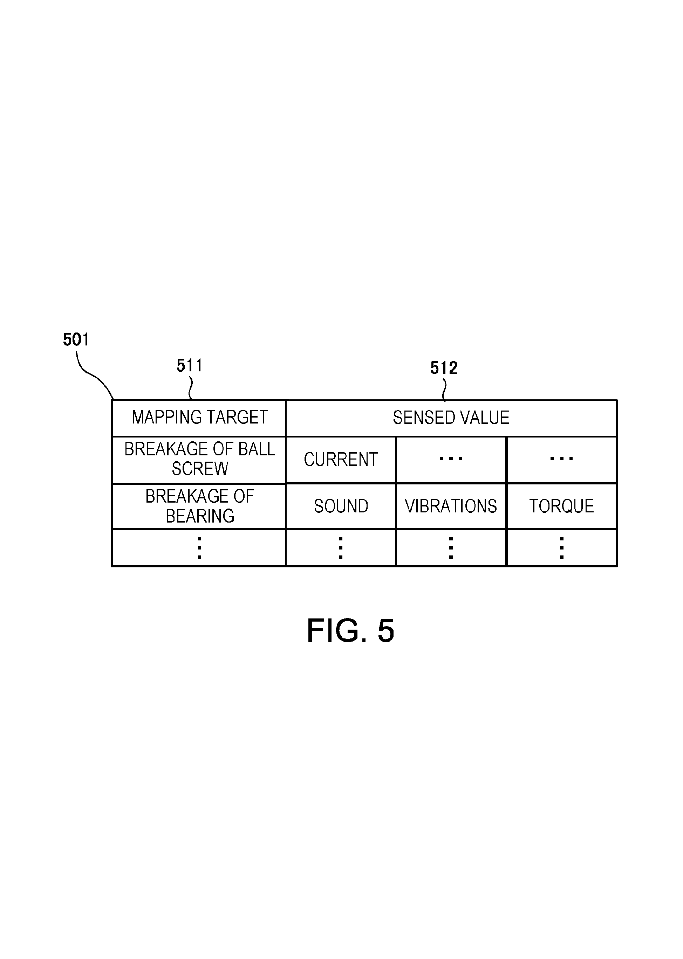

Fig. 5 is a table showing an example of a table 501 in the machine tool 200 according to the example embodiment. The table 501 stores a sensed value 512 in association with a mapping target 511 to be mapped as the two-dimensional map 331. For each of a breakage of the ball screw and a breakage of the bearing, a current applied to the motor 212, sound, vibrations, torque, and the like are stored as the sensed value 512 that should be obtained and analyzed. The machine tool 200 looks up the table 501 and determines data that should be obtained to display the two-dimensional map 331.

The above-described machine tool 200 includes a CPU (Central Processing Unit), a ROM (Read Only Memory), a RAM (Random Access Memory), and a storage as hardware. The machine tool 200 reads out, to the RAM, data necessary to implement the example embodiment, and executes them by the CPU. Databases, various parameters, data, programs, and modules are stored in the storage.

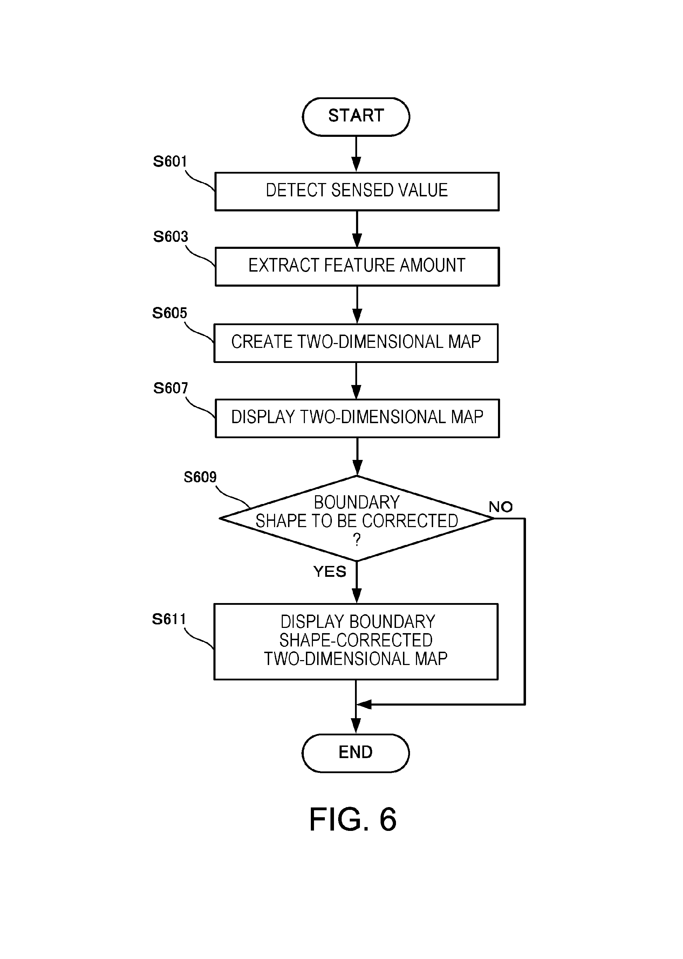

Fig. 6 is a flowchart for explaining the processing procedures of the machine tool 200 according to the example embodiment. The CPU executes a program complying with this flowchart, implementing each functional arrangement shown in Fig. 3B.

In step S601, the detector 301 detects, as a sensed value during warming-up, at least one sensed value among vibrations, sound, and a current, heat, light, and power value applied to the motor 212 or the spindle. In step S603, the feature amount extractor 302 reduces the dimensions of the feature amount of the sensed value and extracts the first and second feature amounts. In step S605, the display 303 generates the screen of the two-dimensional map 331 in which sensed values are plotted on a plane having the first axis 332 defined by the first feature amount and the second axis 333 defined by the second feature amount. Further, the display 303 generates the three boundaries 334 to 336 laid out like contour lines to represent the possibility of generation of an anomaly in the ball screw.

In step S607, the display 303 displays the created two-dimensional map 331 on the display. In step S609, the corrector 304 determines whether to correct the boundary shape. If the corrector 304 determines not to correct the boundary shape (NO in step S609), the machine tool 200 ends the processing. If the corrector 304 determines to correct the boundary shape (YES in step S609), the process advances to step S611. In step S611, the display 303 displays the boundary shape-corrected two-dimensional map 331.

In the example embodiment, the detector 301 detects a current value. However, the detector 301 detects not only a current value, but also the values of vibrations, sound, heat, light, and power generated at the time of processing.

According to the example embodiment, sensed values during warming-up are detected, a two-dimensional map is displayed, and the current state of the machine tool can be visually grasped easily. If sensed values in the state of the machine tool at the time of shipment from the factory are detected, the current stage of the state of the machine tool from the state at the time of shipment can be visually grasped. For example, the serviceman of the machine tool can propose the timing of replacement of a ball screw to the user while presenting the two-dimensional map at a timing such as periodic inspection. The serviceman can also present the state of degradation of the ball screw to the user. For example, which of clogging of chips and a scratch degrades the ball screw can be understood, and the serviceman can make a more proper proposal to the user.

For example, something may hit the machine tool, impair the state of the ball screw, and decrease the processing accuracy. The serviceman can check the two-dimensional map from the time of shipment from the factory and clarify the cause of the decrease in processing accuracy. That is, which of the initial failure of the machine tool and a late failure is the cause can be clarified, and which of the machine tool manufacturer or the user is responsible can be made clear. As long as sensed values during warming-up are obtained and accumulated, the serviceman and user can check the two-dimensional map, as needed.

Note that the display 303 may display a plurality of two-dimensional maps side by side on one screen. For example, the display 303 may simultaneously display on one screen a two-dimensional map regarding a breakage of the ball screw 210 and a two-dimensional map regarding a breakage of the bearing. By simultaneously displaying a plurality of two-dimensional maps, the possibilities of generation of various anomalies can be checked on one screen.

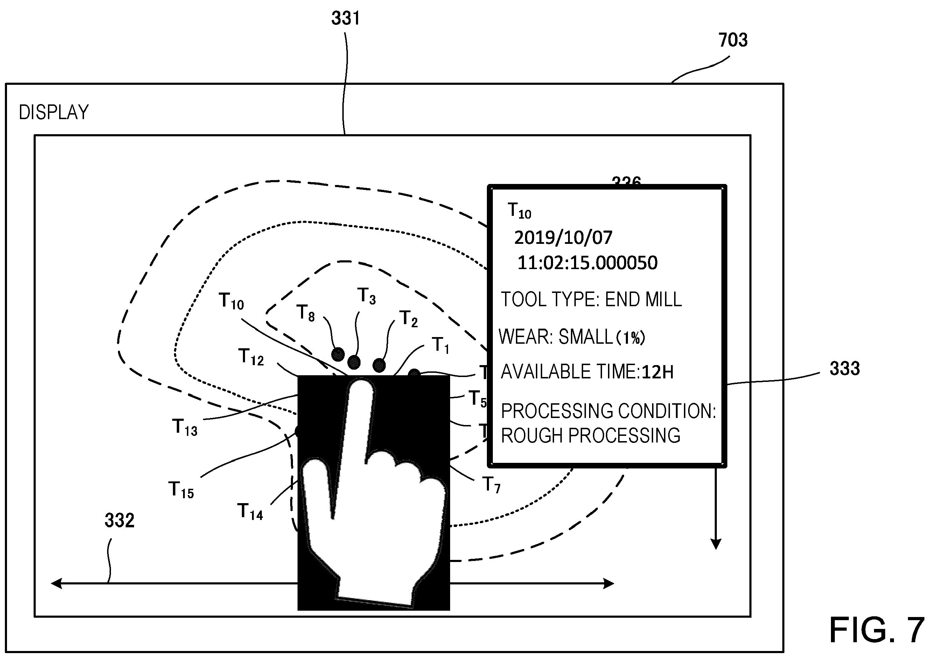

As shown in Fig. 7, a display 703 includes a touch screen. When a point "T10" on the displayed two-dimensional map 331 is touched (or clicked with a mouse or the like), information (date & time, sensed value, tool type, available time, processing conditions, and the like) about the point T10 is displayed. By selecting a point plotting a sensed value, information associated with the sensed value is displayed on the screen and a more detailed operating state can be grasped. From this, an operating state before several sec or several min can be grasped. The processing conditions of the next processing can be selected by referring to the position of a point indicting a past operating state on the two-dimensional map, sensed values and processing conditions at the point, and the like.

[Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

**Claims**

1.  A machine tool comprising:

    a detector that detects at least one sensed value among a vibration, sound, and a current, heat, light, and power value applied to drive a ball screw during warming-up;
    a feature amount extractor that extracts a first feature amount and a second feature amount from the sensed value obtained by said detector; and
    a display that displays a point plotting the sensed value, and at least two boundaries laid out like contour lines to represent a possibility of generation of an anomaly in the ball screw, on a plane having a first axis defined by numerical values regarding the first feature amount and a second axis defined by numerical values regarding the second feature amount.

2.  The machine tool according to claim 1, further comprising a corrector that corrects a shape of the boundary.

3.  The machine tool according to claim 1 or 2, wherein said feature amount extractor includes a frequency resolver that resolves a frequency of the sensed value, a normalizer that normalizes data after frequency resolution, and a dimensional compressor that compresses dimensions of the normalized data.

4.  The machine tool according to any one of claims 1 to 3, wherein when the plotted point is selected, said display displays information associated with the plotted point.

5.  A display device that extracts a first feature amount and a second feature amount from a sensed value obtained from a machine tool including a detector configured to detect at least one sensed value among a vibration, sound, and a current, heat, light, and power value applied to drive a ball screw during warming-up, and displays a possibility of generation of an anomaly in the ball screw, said display device displaying a point plotting the sensed value, and at least two boundaries laid out like contour lines to represent the possibility of generation of an anomaly in the ball screw, on a plane having a first axis defined by numerical values regarding the first feature amount and a second axis defined by numerical values regarding the second feature amount.

## FIG. 1

FIG. 2

FIG. 3A

FIG. 3B

FIG. 3C

FIG. 3D

FIG. 4

501

511                    512

| MAPPING TARGET | SENSED VALUE | | |
|---|---|---|---|
| BREAKAGE OF BALL SCREW | CURRENT | . . . | . . . |
| BREAKAGE OF BEARING | SOUND | VIBRATIONS | TORQUE |
| ⋮ | ⋮ | ⋮ | ⋮ |

# FIG. 5

START

S601 — DETECT SENSED VALUE

S603 — EXTRACT FEATURE AMOUNT

S605 — CREATE TWO-DIMENSIONAL MAP

S607 — DISPLAY TWO-DIMENSIONAL MAP

S609 — BOUNDARY SHAPE TO BE CORRECTED ? — NO

YES

S611 — DISPLAY BOUNDARY SHAPE-CORRECTED TWO-DIMENSIONAL MAP

END

FIG. 6

FIG. 7

EP 4 043 853 A1

**INTERNATIONAL SEARCH REPORT**

International application No.

PCT/JP2020/041229

### A. CLASSIFICATION OF SUBJECT MATTER
G01M 13/02(2019.01)i; B23Q 17/00(2006.01)i; B23Q 17/12(2006.01)i; B29C 45/76(2006.01)i
FI: G01M13/02; B29C45/76; B23Q17/00 A; B23Q17/12; B23Q17/00 D
According to International Patent Classification (IPC) or to both national classification and IPC

### B. FIELDS SEARCHED
Minimum documentation searched (classification system followed by classification symbols)
F16H19/00-37/16, 49/00, G01M13/00-13/045, 99/00

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2018-128284 A (MITSUBISHI HITACHI POWER SYSTEMS, LTD.) 16 August 2018 (2018-08-16) paragraphs [0044]-[0058], fig. 1-9 | 1-5 |
| Y | JP 4-84728 A (CENTRAL GLASS CO., LTD.) 18 March 1992 (1992-03-18) page 2, upper left column, lines 5-10 | 1-5 |
| Y | JP 2000-238106 A (TOSHIBA MACHINE CO., LTD.) 05 September 2000 (2000-09-05) paragraph [0008] | 1-5 |
| Y | WO 2019/187138 A1 (MAKINO MILLING MACHINE CO., LTD.) 03 October 2019 (2019-10-03) paragraph [0059] | 1-5 |
| Y | JP 2017-161476 A (TOSHIBA MACHINE CO., LTD.) 14 September 2017 (2017-09-14) paragraph [0061] | 1-5 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 December 2020 (03.12.2020) | 22 December 2020 (22.12.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2020/041229

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2019/049688 A1 (NIPPON TELEGRAPH AND TELEPHONE CORP.) 14 March 2019 (2019-03-14) paragraph [0027], fig. 3 | 2-4 |
| Y | JP 2006-258535 A (OMRON CORP.) 28 September 2006 (2006-09-28) paragraphs [0089]-[0091], fig. 9-10 | 2-4 |
| Y | WO 2019/107315 A1 (NATIONAL INSTITUTE OF ADVANCED INDUSTRIAL SCIENCE AND TECHNOLOGY) 06 June 2019 (2019-06-06) paragraphs [0022]-[0025] | 3-4 |
| Y | JP 2019-96977 A (FUJITSU LTD.) 20 June 2019 (2019-06-20) paragraph [0026], fig. 8 | 3-4 |
| Y | WO 2016/016956 A1 (HITACHI, LTD.) 04 February 2016 (2016-02-04) example 2 (paragraphs [0059]-[0065], fig. 9-10) | 4 |
| A | JP 7-168619 A (HITACHI, LTD.) 04 July 1995 (1995-07-04) paragraphs [0008], [0051]-[0052] | 3 |
| A | JP 2001-255243 A (JAPAN NUCLEAR CYCLE DEVELOPMENT INST STATES OF PROJECTS) 21 September 2001 (2001-09-21) entire text, all drawings | 1-5 |
| A | JP 57-168120 A (HITACHI, LTD.) 16 October 1982 (1982-10-16) entire text, all drawings | 1-5 |

Form PCT/ISA/210 (continuation of second sheet) (January 2015)

INTERNATIONAL SEARCH REPORT

Information on patent family members

International application No.

PCT/JP2020/041229

| Patent Documents referred in the Report | Publication Date | Patent Family | Publication Date |
|---|---|---|---|
| JP 2018-128284 A | 16 Aug. 2018 | WO 2018/143404 A1<br>TW 201840990 A<br>KR 10-2019-0100379 A<br>CN 110235010 A<br>SG 11201907246R A | |
| JP 4-84728 A | 18 Mar. 1992 | (Family: none) | |
| JP 2000-238106 A | 05 Sep. 2000 | US 6332355 B1<br>column 3, lines 40-53 | |
| WO 2019/187138 A1 | 03 Oct. 2019 | (Family: none) | |
| JP 2017-161476 A | 14 Sep. 2017 | (Family: none) | |
| WO 2019/049688 A1 | 14 Mar. 2019 | CN 111108362 A | |
| JP 2006-258535 A | 28 Sep. 2006 | US 2006/0210141 A1<br>paragraphs [0087]-[0089], fig. 9-10<br>CN 1834607 A | |
| WO 2019/107315 A1 | 06 Jun. 2019 | (Family: none) | |
| JP 2019-96977 A | 20 Jun. 2019 | US 2019/0156530 A1<br>paragraph [0049], fig. 8 | |
| WO 2016/016956 A1 | 04 Feb. 2016 | US 2017/0212012 A1<br>example 2 (paragraphs [0085]-[0101], fig. 9-10) | |
| JP 7-168619 A | 04 Jul. 1995 | (Family: none) | |
| JP 2001-255243 A | 21 Sep. 2001 | (Family: none) | |
| JP 57-168120 A | 16 Oct. 1982 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019202985 A

- JP 2000238106 A